# EUROPEAN PATENT APPLICATION

(11) **EP 1 703 424 A2**
(43) Date of publication of application: **20.09.2006**
(21) Application number: 06251315.5
(22) Date of filing: 13.03.2006
(51) Int. Cl.: G06F 17/30, G11B 27/00

(54) **Data capture apparatus, data capture method, and computer program**

(30) Priority: 14.03.2005 JP 2005071749
(71) Applicant: SONY CORPORATION, Tokyo 141 (JP)
(72) Inventor: Tsuchiya, Kazuhisa, Shinagawa-ku, Tokyo 141 (JP); Yoshimori, Hayato, Shinagawa-ku, Tokyo 141 (JP); Minami, Miyuki, Shinagawa-ku, Tokyo 141 (JP); Yoshinaka, Shota, Shinagawa-ku, Tokyo 141 (JP)
(74) Representative: Turner, James Arthur

(57) **Abstract**

For material data to be captured in a specified capture sequence, a same recording medium must be repetitively loaded or specified unless the capture sequence is continuous. A data capture apparatus for capturing material data in accordance with a capture queue is made up of (a) a file search block for searching a recording medium specified as a material data capture source for a material file subject to capture regardless of a capture sequence specified in the capture queue; and (b) a search result display block for, if a material file subject to capture is found on the recording medium, explicitly displaying all corresponding material files on an operation screen as files to be preferentially captured.

## Description

This invention relates to data capture apparatus, data capture methods, and computer programs.

First, terms as will be used herein are defined.

Nonlinear editing denotes capturing material data into random-accessible recording media to execute editing work.

Normally, recording media into which material data is captured are magnetic recording medium called hard discs. This depends, however, on the product forms at the current point of time.

On the other hand, recording media from which material data is captured are various; for example, hard discs, semiconductor storage devices, and optical storage media.

Units of capture-source recording media are individual recording media or particular data folders.

Material data includes moving image data, still image data, sound source data, text data, animation data, and combinations thereof. These complex data is referred to as multimedia data.

It should be noted that recording media and material data are attached with identification codes for uniquely identifying physical devices and materials. Each of these identification codes is referred to as UMID (Unique Material Identifier). Herein, the UMID for recording media (or physical devices) is referred to as a device UMID and the UMID for material is referred to as a material UMID.

Editing work requires capturing, at any stage thereof, material data to be finally outputted. Meanwhile, recent material data is huge in data amount. Hence, generally, a procedure is used in which editing work is executed by use of the material data of low quality (or a low resolution) and the material data of high quality (or a high resolution) is captured on the basis of editing results as a final output.

Normally, material data is captured in a sequence of material data names or in which edited lists are reproduced. An edited list herein denotes a list in which a clip reproduction sequence is described. A clip herein denotes material data that makes up a program.

In many cases, however, material data subject to capture is distributed to several recording media.

Therefore, every time the capture of one piece of material data ends, an editing personnel must search for a recording medium containing next data and load the retrieved recording medium on a reproducing apparatus.

For example, if a recording medium is of portable type, then it is necessary to load another recording medium on the reproducing apparatus. For example, again, if a recording medium is specified as a data folder, then it is necessary to specify another data folder.

In any case, related-art technologies require the work of searching extremely large numbers of objects for proper recording media. Also, jobs often occur for loading retrieved recording media and specify retrieved data folders again. These jobs are complicated and time and lower consuming, so that, if large amounts of material data are handled, the work load becomes excessive.

In related-art work methods, material data is captured in a specified capture sequence, so that, if the capture sequence is not continuous, same recording media must be repetitively loaded or specified, thereby causing a problem of significantly increasing the work load.

Therefore, applicants hereof address the above-identified and other problems associated with related-art methods and apparatuses and solve or at least alleviate the addressed problems by providing techniques for significantly efficiently capturing material data.
Various respective aspects and features of the invention are defined in the appended claims. Features from the dependent claims may be combined with features of the independent claims as appropriate and not merely as explicitly set out in the claims.

One embodiment of the present invention relates to a data capture apparatus for capturing material data in accordance with a capture queue. Another embodiment of the present invention relates to a data capture method that is executed in the above-mentioned data capture apparatus on an apparatus functionally equivalent thereto. Still another embodiment of the present invention relates to a computer program for making a computer function as a data capture apparatus.

As one of the above-mentioned techniques, the applicants hereof propose a method having following processing functions:
(1) Processing of searching a recording medium specified as a material data source for a material file to be captured regardless of a capture sequence specified in a capture queue; and
(2) Processing of, if the material file to be captured is found on the recording medium, explicitly displaying all material files concerned on an operation screen as subjects to be preferentially captured.

Also, applicants hereof propose a method having following processing functions:
(1) Processing of searching a first recording medium specified as a material data capture source for a material file to be captured regardless of a capture sequence specified in a capture queue; and
(2) Processing of, if the material file to be captured is found on the first recording medium, preferentially starting the capture of all material files concerned into a second recording medium.

It should be noted that the above-mentioned technical methods may be realized by hardware as well as software. Obviously, the above-mentioned processing functions may be executed partially by hardware and partially by software.

The above-mentioned techniques according to the invention allow the preferential capture of material data to be captured found in a range of currently specified recording media.

For example, if there are two or more pieces of material to be captured, these pieces of material data may be continuously captured regardless of a capture sequence specified in a capture queue.

Consequently, the number of times recording media are exchanged or specified may be reduced.

The invention will now be described by way of example with reference to the accompanying drawings, throughout which like parts are referred to by like references, and in which:
FIG. 1 is a block diagram illustrating an exemplary configuration of a nonlinear editing system;
FIG. 2 is a schematic diagram illustrating an exemplary data file to be stored in a recording medium;
FIG. 3 is a block diagram illustrating an exemplary hardware configuration of a nonlinear editing machine;
FIG. 4 is a schematic diagram illustrating an exemplary functional configuration of the nonlinear editing machine;
FIG. 5 is schematic diagram illustrating transitions of capture work screens;
FIG. 6 is a flowchart indicative of a batch capture processing procedure;
FIG. 7 is a flowchart indicative of the batch capture processing procedure;
FIG. 8 is an exemplary initial screen to be displayed at the beginning of batch capture processing;
FIG. 9 is an exemplary screen indicative of a status in which a clip at a start position has been selected for capture;
FIG. 10 is an exemplary screen indicative of a stage in which capturing of clip 1, a first clip, has been completed;
FIG. 11 is an exemplary screen indicative of sorted capture sequence;
FIG. 12 is an exemplary screen indicative of a status in which a clip to be captured has been selected after sorting; and
FIG. 13 is an exemplary screen indicative of a status in which a display form of other clips existing on a same disc as clips solved by UMID has been changed and displayed.

A nonlinear editing system based on techniques associated with the present invention will be described in further detail by way of embodiments thereof with reference to the accompanying drawings.

It should be noted that known or publicly known technologies of the technical field concerned will be applied to portions hereof not especially illustrated or described.

It should also be noted that the embodiments of the invention described below are illustrative only and therefore the present invention is not restricted to these embodiments.

### (A) Nonlinear editing system

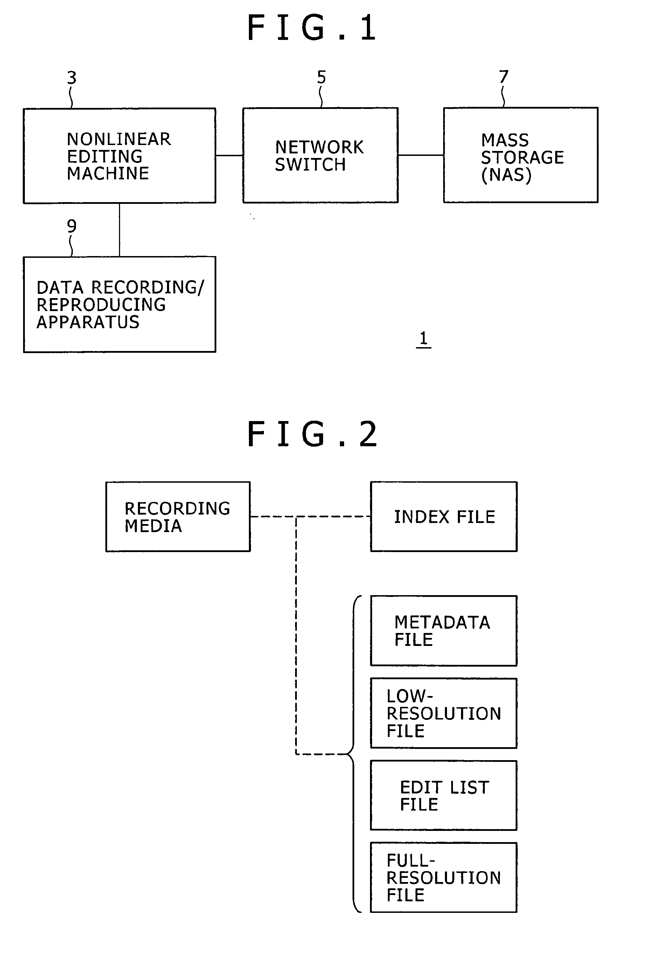

Now, referring to FIG. 1, there is shown an exemplary configuration of a nonlinear editing system.

A nonlinear editing system 1 shown in FIG. 1 has a nonlinear editing machine 3, a network switch 5, a mass storage 7, and a data recording/reproducing apparatus 9, each of which may be in the singular or the plural in number.

The nonlinear editing machine 3 is a data processing apparatus for executing the capture of material data, the editing of captured data, and the outputting of edited data in a digital data format.

The nonlinear editing machine 3 is compliant with various types of communication such as FTP (File Transfer Protocol), IEEE 1394, SCSI (Small Computer System Interface), and USB (Universal Serial Bus). Obviously, the nonlinear editing machine 3 need not be compliant with all of these communication schemes. In the present embodiment, the network communication is executed on the basis of TCP/IP (Transmission Control Protocol/Internet Protocol).

The network switch 5 is an interconnection apparatus for interconnecting the nonlinear editing machine 3 and the mass storage 7 via a network. For example, the network switch 5 is configured with a gigabit switch.

The mass storage 7 is configured with a storage device called a NAS (Network Attached Storage). Namely, the mass storage 7 is configured with unifunctional server with a hard disc, a network interface, basic software, and management utilities integrated.

The mass storage 7 stores metadata and low-resolution data minimum necessary for the editing of each piece of material data. Also, the mass storage 7 stores edit list data of material data. Duplication of these pieces of data and the creation of edit lists are executed by application software installed in the nonlinear editing machine 3. It should be noted that the data size of one folder is limited to the data size of one portable recording medium at most.

The data recording/reproducing apparatus 9 is a data processing apparatus having a material data recording function and a material data reproduction function. In the example shown in FIG. 1, the data recording/reproducing apparatus 9 is directed connected to the nonlinear editing machine 3; it is also practicable to connect the data recording/reproducing apparatus 9 to the nonlinear editing machine 3 via the network switch 5. The data recording/reproducing apparatus 9 provides a function of reproducing material data from portable recording media and a function of recording material data to portable recording media.

### (B) Exemplary recording media data file

Referring to FIG. 2, there are shown exemplary data files to be stored in a recording medium. These data files contain material data and adjunct data necessary for editing.

An index data file contains adjunct data to material data storing text, image, and other search information.

A metadata file contains adjunct data to material data storing structured metadata and descriptive metadata.

A low-resolution file contains adjunct data to material data. The low-resolution file has a comparatively small data size. Therefore, a low-resolution file may also be edited by a nonlinear editing machine based on high-speed transmission or personal computer.

An edit list file stores results of offline editing by use of a low-resolution file.

For example, an SMI file written in SMIL (Synchronized Multimedia Integration Language) is used for the edit list file. Each SMIL file describes display positions and reproduction timings of different types of media data such as moving picture, sound source, and text.

A full-resolution file contains material data. A full-resolution file holds the information of material at high quality, or full resolution, so that the data size becomes large. This makes full-resolution files unsuitable for the editing by a nonlinear editing machine based on high-speed transmission or personal computer.

### (C) Nonlinear editing machine

The following describes a hardware configuration and a functional configuration of the nonlinear editing machine 3 for use in capturing material data.

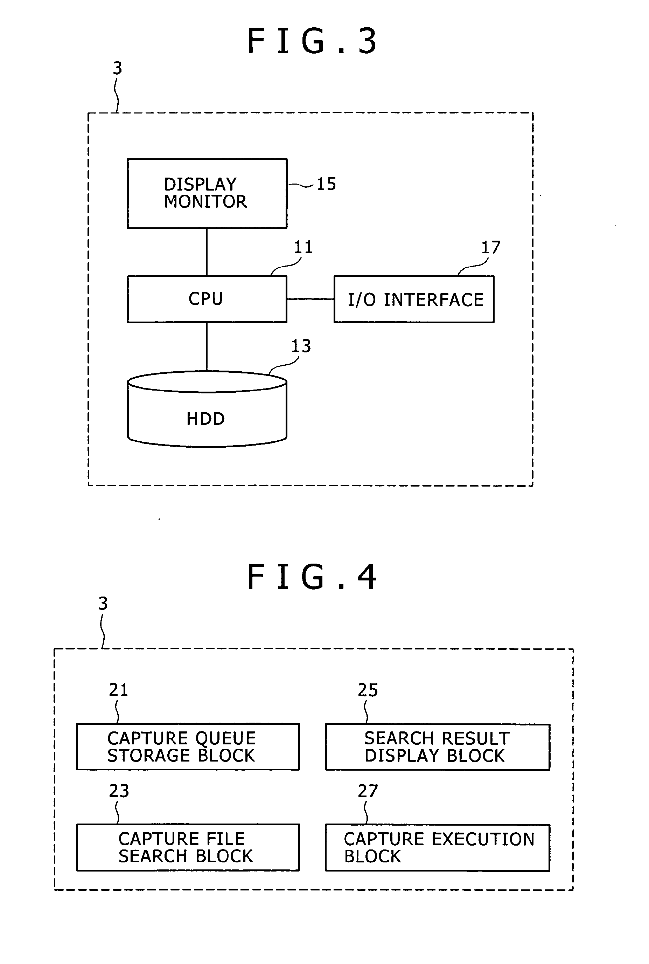

Referring to FIG. 3, there is shown an exemplary hardware configuration of the nonlinear editing machine 3. The nonlinear editing machine 3 is based on a computer. Namely, the nonlinear editing machine 3 is made up of a CPU 11, a hard disc drive 13, a display monitor 15, and an input/output interface 17.

Generally, a CPU having a high computing power is used for the CPU 11. The processing functions of the nonlinear editing machine 3 are realized by executing basic software and application software on the CPU 11.

The hard disc drive 13 is used to provide a work area for the material data and adjunct data necessary for editing work.

The display monitor 15 displays a graphical user interface. The display monitor 15 may be of any type of display device. The display monitor 15 need not be arranged integrally with the housing of the nonlinear editing machine 3; the display monitor 15 may be arranged as a standalone unit externally connected to the nonlinear editing machine 3.

The input/output interface 17 has various types of connectors for the connection with a network and peripheral devices.

Referring to FIG. 4, there is shown an exemplary functional configuration of the nonlinear editing machine 3 with attention paid to a data capture function thereof. The nonlinear editing machine 3 is made up of a capture queue storage block 21, a capture file search block 23, a search result display block 25, and a capture execution block 27.

These functions are executed when the execution of a batch capture function is specified by editing personnel.

The capture queue storage block 21 provides a storage area for storing a queue for specifying a sequence of capturing material files (namely, full-resolution files) not captured in the nonlinear editing system. The capture queue storage block 21 is allocated in a part of the area on the hard disc drive 13.

A capture queue is generated on the basis of edit lists or log clips. For example, a capture queue is generated by extracting, in a sequence of reproduction, only these clips (or material data) listed in an edit list which have not been captured.

For example, again, a capture queue is generated by extracting, in a sequence of file names, only these clips (or material data) listed in an edit list which have not been captured.

For example, again, a capture queue is generated in a sequence in which editing personnel specifies log clips. A log clip herein denotes a clip with a full-resolution file necessary for reproduction not captured, only reflecting metadata (including UMID).

The capture file search block 23 searches specified recording media for the material data specified in a capture queue. This search is executed on the basis of a database having the device UMID unique to recording media and the material UMID unique to material data.

The capture file search block 23 matches the database with the material UMID subject to capture, thereby enhancing the search efficiency. The material UMID includes a device UMID indicative of a material data storage location.

The search result display block 25 displays the results of the search by the capture file search block 23 onto the display monitor 15.

If the material data subject to capture is found as a result of the search, then the display mode of the material data (or clips) subject to capture is changed to the display mode indicative that the material data is being captured.

On the other hand, if the material data subject to capture is not found, then a message thereof is displayed along with a message for prompting the confirmation of the specification of the recording media specifying the search range.

It should be noted that if the material data subject to capture is included in a newly specified recording medium, all other material data to be captured that exist on the same recording medium are explicitly displayed.

In the present embodiment, the material data subject to capture is displayed in a different display colors than the already captured material data (or clips) or the material data (or clips) being captured.

The capture execution block 27 captures a full-resolution file of the material data (or clips) found by the above-mentioned search from specified recording media into the hard disc drive 13.

### (D) Capture work screen

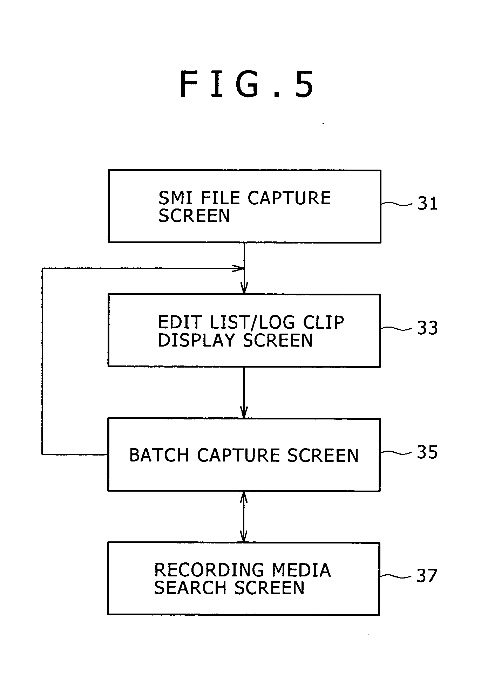

Referring to FIG. 5, there is shown a sequence of screen transitions for use in capture work. It should be noted that the mass storage 7 stores an SMI file generated by use of low-resolution data of small data amount already captured.

First, editing personnel displays an SMI file capture screen 31 on the display monitor 15. On this screen, editing personnel selects an SMI file to be captured. The selected SMI file is captured from the mass storage 7 into the hard disc drive 13. The captured SMI file is interpreted by the CPU 11. As a result of the interpretation, edit lists and log clips for online editing are generated.

The generated edit lists and log clips are displayed on an edit list/log clip display screen 33.

When editing personnel specifies the capturing of edit lists or log clips through the edit list/log clip display screen 33, a batch capture screen 35 is displayed on the display monitor 15.

If edit lists are specified for capture, a capture queue with only clips with no full-resolution file among the edit lists extracted is generated. In this case, a capture queue capturing sequence is determined in an order of edit list reproduction.

On the other hand, if log clips are specified for capture, a capture queue with a log clip specification sequence used as a capture sequence is generated.

While the batch capture screen 35 is being displayed, the capture of the clips specified in the capture queue is executed. It should be noted that, if no full-resolution file for the specified clip is found, a recording media search screen 37 is displayed on the display monitor 15.

If a correct portable recording medium is loaded or if a correct file is specified through the recording media search screen 37, the capturing of full-resolution files is executed.

Until all clips specified in the capture queue have been captured, the batch capture screen 35 and the recording media search screen 37 are repetitively displayed on the display monitor 15.

When the capture of all clips specified in the capture queue has been completed, all clips making up the edit list become ready for online editing.

### (E) Batch capture processing

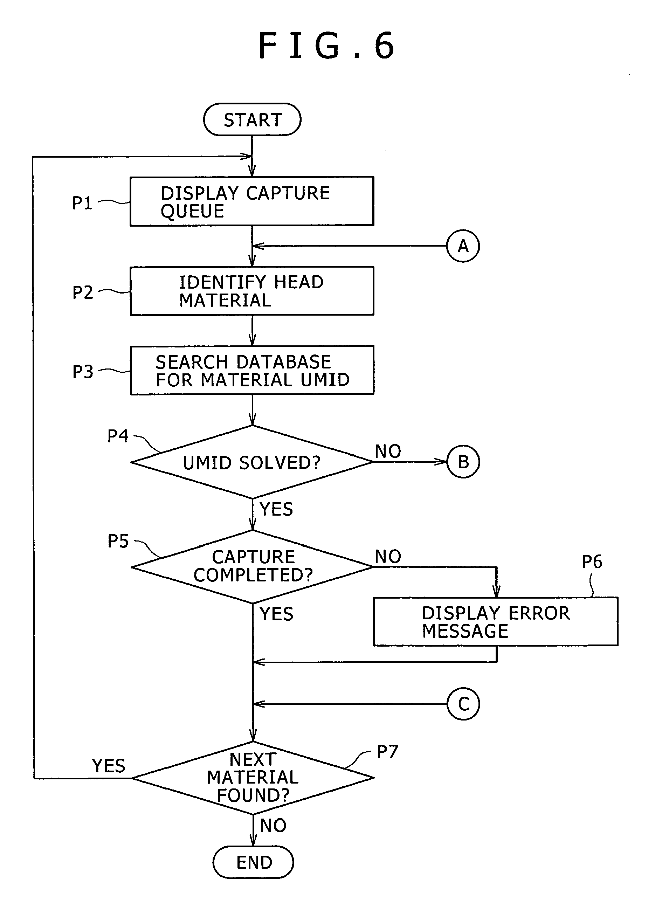

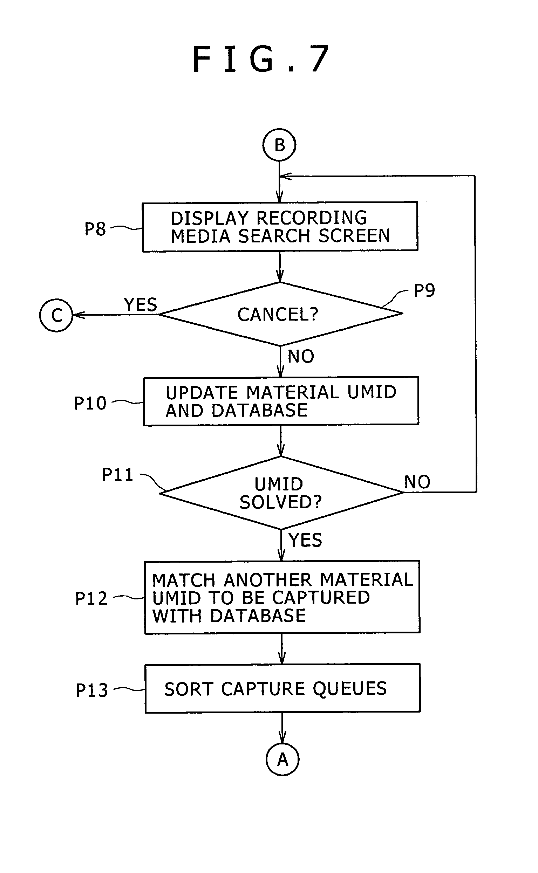

Referring to FIGS. 6 and 7, there are shown a procedure of batch capture processing to be executed on the batch capture screen 35 and the recording media search screen 37.

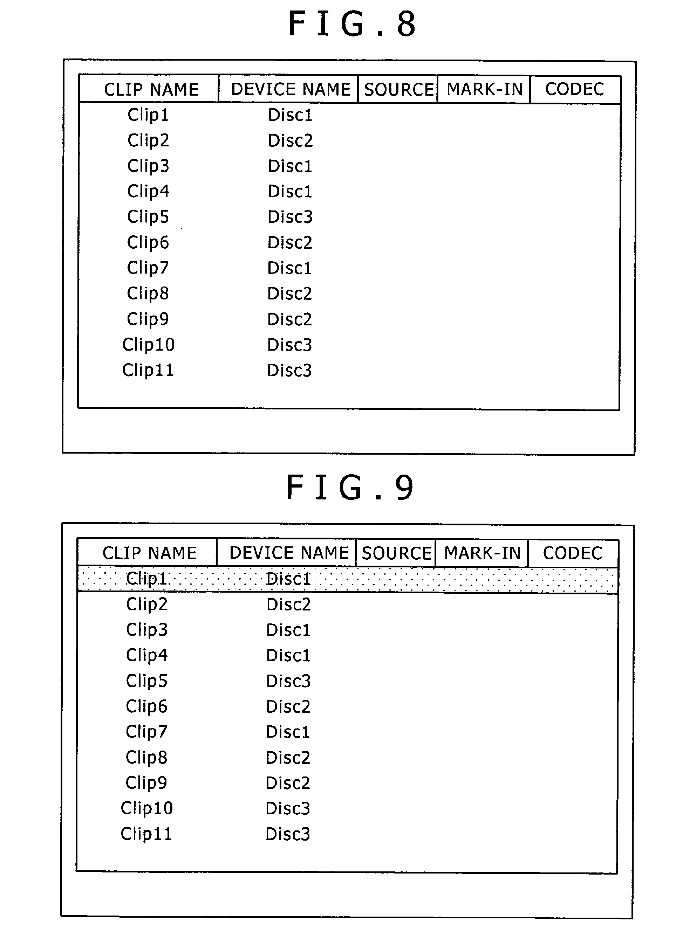

First, the nonlinear editing machine 3 displays the generated capture queue on the monitor screen (P1). At least the names of clips to be captured and the names of recording media containing full-resolution files thereof are displayed. Referring to FIG. 8, there is shown an example of this display. In addition, adjunct information about clips is displayed. FIG. 8 shows source, mark-in, and codec as adjunct information.

In the example shown in FIG. 8, the capture queue contains 11 clips. The monitor screen shows these clips in a sequence of earlier capture.

The example shown in FIG. 8 shows that the clips making up the capture queue are distributed over three discs. For example, disc 1 stores clips 1, 3, 4, and 7. Disc 2 stores clips 2, 6, 8, and 9. Disc 3 stores clips 5, 10, and 11.

Next, the nonlinear editing machine 3 identifies the clip at the start position as a subject of capture (P2).

Referring to FIG. 9, there is shown a status in which the clip at the start position is selected as the subject of capture. In FIG. 9, the background of clip 1 is highlighted. This is referred to as high-light display. Highlight display shows that clip 1 is in the selected status.

Then, the nonlinear editing machine 3 matches the material UMID for identifying clip 1 with the database (P3).

The database stores the device UMID of discs managed by the nonlinear editing machine 3, the material UMID for identifying the material data contained in each disc, and the original positions at which these UMIDs were captured.

If material data is found (namely, if the decision is Yes in P4), the nonlinear editing machine 3 determines that UMID solution has been obtained.

The UMID is solved if the following three conditions are satisfied:
- the material UMID exists in the database;
- the disc containing the material UMID may be accessed; and
- the material data may be accessed to be captured.

It is assumed here that disc 1 be loaded on the data recording/reproducing apparatus 9. In this case, the nonlinear editing machine 3 continues the capture of material data and determines whether the capture has been completed or not (P5).

If the capture of material data is found failing (namely, if the decision is No), then the nonlinear editing machine 3 displays an error message on the monitor screen (P6).

If the capture of material data is found successful (namely, if the decision is Yes), then the nonlinear editing machine 3 determines whether there is a next material (P7).

In this case, the capture of clip 1, the first clip, has been completed, so that the nonlinear editing machine 3 takes to the capture of the next clip, clip 2.

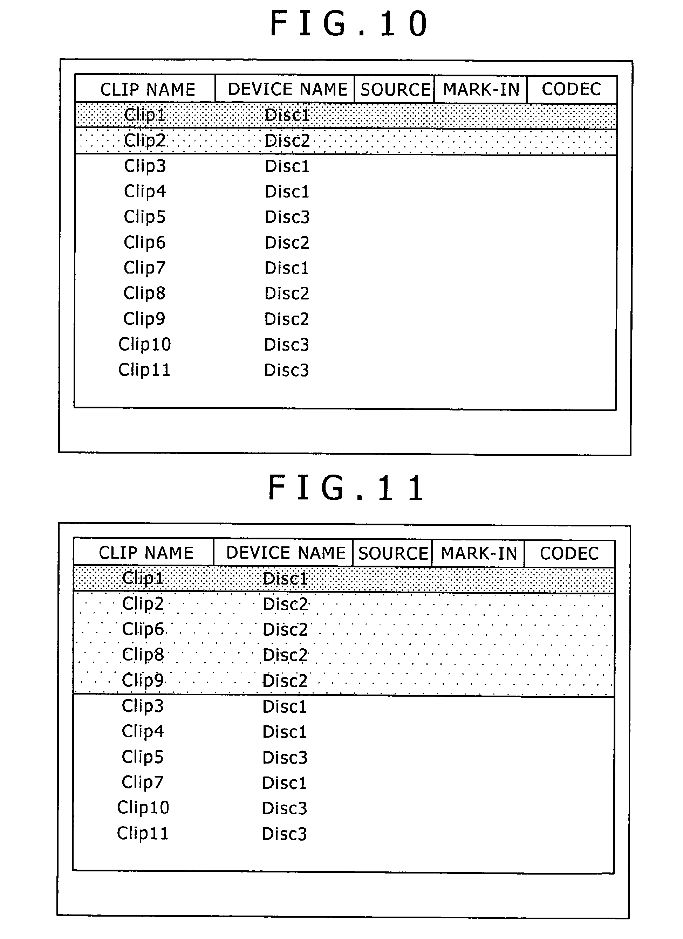

Referring to FIG. 10, there is shown an exemplary screen indicative of a stage in which the capture of the first clip, clip 1, has been completed. As shown in FIG. 10, the background of clip 1 completed in capture turns into dark gray for example. At the same time, the background of clip 2 positioned at the beginning, one of the clips of which capture has not been completed, is highlighted (P1, P2).

Likewise, the nonlinear editing machine 3 matches the material UMID for identifying clip 2 with the database (P3). Clip 2 exists on disc 2. However, because disc 1 is loaded on the data recording/reproducing apparatus 9, so that disc 2 cannot be accessed.

Consequently, the nonlinear editing machine 3 determines that no full-resolution file of clip 2 has been found.

In this case (namely, if the decision is No in P4), the nonlinear editing machine 3 displays a recording media search screen on the monitor screen (P8).

Here, editing personnel specifies a recording medium in which search is executed. For example, editing personnel searches for disc 2 and loads disc 2 on the data recording/reproducing apparatus 9, thereby specifying disc 2 as a search range.

It should be noted that editing personnel may end the capture work at this point of time (P9).

When disc 2 is specified as a new search range, the nonlinear editing machine 3 updates the material UMID and the database (P 10).

At this moment, if the disc loaded on the data recording/reproducing apparatus 9 is a disc not registered with the database, then the nonlinear editing machine 3 registers the newly detected device UMID material UMID, and other information with the database.

On the other hand, if the disc loaded on the data recording/reproducing apparatus 9 is a disc already registered with the database, the nonlinear editing machine 3 updates the information of the material UMID contained in this disc.

The nonlinear editing machine 3 matches the material UMID of clip 2 with the updated database. If the disc loaded on the data recording/reproducing apparatus 9 is disc 2, the UMID is solved; otherwise, the UMID is not solved (P11). Until the UMID is solved, the recording media search screen is repetitively displayed.

Here, it is assumed that disc 2 be loaded. In this case, the nonlinear editing machine 3 solves the UMID. At the same time, the nonlinear editing machine 3 matches another material UMID to be captured with the database to determine whether there is any other clips (material UMIDs) to be solved. Namely, of the clips stored in disc 2, the nonlinear editing machine 3 detects these clips which are contained in the capture queue.

Next, the nonlinear editing machine 3 prioritizes, in the capture queue, the capture of all clips with UMID solved such that the capture of these clips may be preferentially started (P13). Namely, the nonlinear editing machine 3 raises the priority in the capture queue.

Referring to FIG. 11, there is shown an exemplary monitor screen after sorting. The screen shows that four clips existing on disc 2 have moved up. It should be noted that FIG. 11 explicitly shows four clips that may be captured from the same disc. Namely, the backgrounds of clips 2, 6, 8, and 9 are different from those of other clips. For example, the backgrounds of these clips are highlighted in a different manner than the highlight display indicative of the selection for capture.

Making sure of this display, editing personnel may easily confirm that four clips to be captured are contained in disc 2. At the same time, editing personnel may understand that a maximum of three times of replacement may be saved also only with respect to disc 2. In this embodiment, two times of replacement may be saved with respect to disc 2.

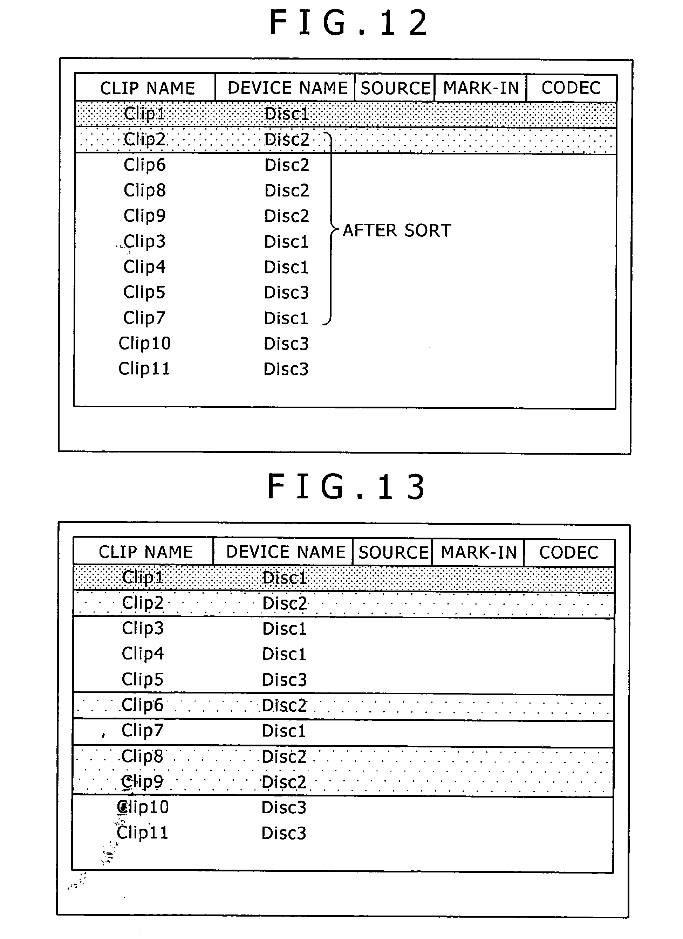

Then, the nonlinear editing machine 3 restarts a capture operation with the top clip, namely, clip 2, as the subject of capture, among the clips entered in the capture queue and not yet captured. Referring to FIG. 12, there is shown a monitor screen indicative of a status in which clip 2 has been selected as the subject of capture.

The above-mentioned operations are repeated until there is no more uncaptured clips in the capture queue.

### (F) Effects of the embodied capture method

Use of the capture method practiced as one embodiment of the invention significantly reduces the number of times discs are replaced. As a result, the novel method significantly shorten the time for shifting from offline editing to online editing.

Also, the novel method automatically changes capture sequences only by disc replacement, thereby significantly mitigating the operation load of editing personnel. At the same time, as capture sequences are changed, display modes are automatically changed, there allowing editing personnel to easily check clip arrangement sequence changes.

### (G) Other embodiments

(a) In the above-mentioned embodiments, the background of the clip to be preferentially captured is changed in brightness from that of other clips.

It is also practicable to change a display color of the clip to be preferentially captured from a display color of other clips. In this case, various colors may be used, thereby allowing editing personnel to easily check mode changes. Obviously, both background color and background brightness may be combined to indicate clips to be preferentially captured.
(b) In the above-mentioned embodiments, the clip to be preferentially captured is arranged to the top of the capture sequence.

However, it is also practicable to use method in which the clip to be preferentially captured is changed only in display, not in display position on the monitor screen.

Referring to FIG. 13, there is shown the above-mentioned method. In the case of FIG. 13, a clip arrangement remains the same as an initial arrangement, but display modes of other clips existing on the same disc as clip 2 with UMID solved are changed.
(c) In the above-mentioned embodiments, a preferential capture operation starts after changing display modes of other clips existing on the same disc as clip 2 with UMID solved.

If there is a material file to be captured, it is also practicable to use a method in which the capture of all material files concerned is preferentially started without displaying these changed display modes.
(d) In the above-mentioned embodiments, if a UMID solution has been attained by disc replacement, search is made for other clips to be captured that exist on the same disc.

If there is no disc replacement, it is practicable to use a method in which search is made for other clips existing on the currently loaded disc that have not yet been captured.

For example, a method may be used in which, if disc 1 has already been loaded at the capture of clip 2 and disc 1 is specified as a search range on the recording media search screen, search is made for all other clips to be captured that exist on the disc 1.

In this case, capture of other clips to be captured on disc 1, namely, clips 3, 4, and 7 may be preferentially started without replacing disc 1 by disc 2. Consequently, one more replacement operation may be saved.
(e) In the above-mentioned embodiments, full-resolution files are stored on a removable disc.

It is also practicable to use other types of recording media, such as card-type semiconductor storage devices and particular folder in the mass storage 7, for example.
(f) In the above-mentioned embodiments, UMID is used for search for clips making up a capture queue.

It is also practicable to execute this search operation by use of disc title names or material title names for example.
(g) In the above-mentioned embodiments, the material data to be captured is a full-resolution file.

However, the material data to be captured is not necessary a full-resolution file; for example, the data capture apparatus practiced as one embodiment of the invention may be used to capture any material data.

Consequently, the data capture apparatus may be realized not only as the nonlinear editing machine 3 but also as any of various other products.

For example, the data capture apparatus may be realized in the single product configuration or as other data processing apparatus.

For example, again, the data capture apparatus may be realized as an imaging apparatus such as a video camera or a digital camera for example, an information processing terminal (a portable computer, a mobile phone, a portable game machine, or an electronic notebook, for example), or a game machine.
(h) In the above-mentioned embodiments, if UMID solution has not been attained, search is made for other clips to be captured, in addition to clips subject to search.

It is also practicable to check for the existence of other clips to be captured that may exist on the same disc, thereby sorting the capture sequence when UMID solution has been attained in P4.
(i) In the above-mentioned embodiments, the function as the data capture apparatus is realized by software.

It is also practicable to realize the function of the data capture apparatus partially by software and partially by hardware, namely, by combination of software and hardware, in addition to totally by software or hardware.
(j) The description of the above-mentioned embodiments is for illustrative purpose only, and it is to be understood that changes and variations may be made to the above-mentioned embodiments without departing from the scope of the following claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A data capture apparatus for capturing material data in accordance with a capture queue, comprising:
a file search block operable to search a recording medium specified as a material data capture source for a material file subject to capture regardless of a capture sequence specified in said capture queue; and
a search result display block, if a material file subject to capture is found on said recording medium, operable to display explicitly all corresponding material files on an operation screen as files to be preferentially captured.

2. The data capture apparatus according to claim 1, wherein said search result display block changes a display color of each material file subject to preferential capture to a color different from a color in which other material files are displayed.

3. The data capture apparatus according to claim 1, wherein said search result display block changes a brightness of each material file subject to preferential capture to a brightness different from a brightness in which other material files are displayed.

4. The data capture apparatus according to claim 1, wherein said search result display block brings a material file subject to preferential capture up to top of a capture sequence and then displays said material file subject to preferential capture.

5. A data capture apparatus for capturing material data in accordance with a capture queue, comprising:
a file search block operable to search a first recording medium specified as a material data capture source for a material file subject to capture regardless of a capture sequence specified in the capture queue; and
a capture execution block, if a material file subject to capture is found on said first recording medium, operable to start preferentially to capture all corresponding material files into a second recording medium.

6. A data capture method for capturing material data in accordance with a capture queue, comprising the steps of:
searching a recording medium specified as a material data capture source for a material file subject to capture regardless of a capture sequence specified in said capture queue; and
explicitly displaying, if a material file subject to capture is found on said recording medium, all corresponding material files on an operation screen as files to be preferentially captured.

7. A data capture method for capturing material data in accordance with a capture queue, comprising the steps of:
searching a first recording medium specified as a material data capture source for a material file subject to capture regardless of a capture sequence specified in the capture queue; and
preferentially starting, if a material file subject to capture is found on said first recording medium, to capture all corresponding material files into a second recording medium.

8. A computer program for making a computer function as a data capture apparatus for capturing material data in accordance with a capture queue, comprising the steps of:
searching a recording medium specified as a material data capture source for a material file subject to capture regardless of a capture sequence specified in said capture queue; and
explicitly displaying, if a material file subject to capture is found on said recording medium, all corresponding material files on an operation screen as files to be preferentially captured.

9. A computer program for making a computer function as a data capture apparatus for capturing material data in accordance with a capture queue, comprising the steps of:
searching a first recording medium specified as a material data capture source for a material file subject to capture regardless of a capture sequence specified in the capture queue; and
preferentially starting, if a material file subject to capture is found on said first recording medium, to capture all corresponding material files into a second recording medium.
